# EUROPÄISCHE PATENTSCHRIFT

(11) **EP 3 782 929 B1**
(45) Veröffentlichungstag und Bekanntmachung des Hinweises auf die Patenterteilung: **30.09.2026**
(21) Anmeldenummer: 19193376.1
(22) Anmeldetag: 23.08.2019
(51) Int. Cl.: B65G 1/04, B65G 57/30, B66F 9/06

(54) **BEHÄLTERSTAPELLAGER-BESCHICKUNGSWAGEN**
CONTAINER STACKING PICKING CART
CHARIOT DE CHARGEMENT EN ENTREPÔT DE PILES DE RÉCIPIENT

(43) Veröffentlichungstag der Anmeldung: 24.02.2021
(73) Patentinhaber: Jungheinrich Aktiengesellschaft, 22047 Hamburg (DE)
(72) Erfinder: Cavelius, Jörg, 61118 Bad Vilbel (DE); Becker, Michael, 63512 Hainburg (DE); Morawietz, Timm, 66636 Tholey-Überroth (DE)
(74) Vertreter: Keil & Schaafhausen Patentanwälte PartGmbB

(56) Entgegenhaltungen:
- EP-A1- 0 458 021
- EP-A1- 2 404 847
- DE-A1- 102009 010 551
- DE-A1- 102015 000 968
- DE-C2- 19 849 391
- US-B1- 10 289 117

## Beschreibung

Die vorliegende Erfindung betrifft einen Behälterstapellager-Beschickungswagen mit einem Fahrgestell und einer gegenüber dem Fahrgestell höhenverstellbaren Behälteraufnahme, die einen Aufnahmebereich mit einer Behälteraufstandsfläche aufweist, wobei zwischen dem Fahrgestell und der Behälteraufnahme eine in eine Hubrichtung wirkende Hubeinrichtung angeordnet ist.

Ein derartiger gattungsgemäßer Beschickungswagen ist beispielsweise aus DE 198 49 391 C2 bekannt. Er dient dazu, Behälter in ein Behälterstapellager einzubringen oder aus dem Behälterstapellager zu entnehmen. In einem Behälterstapellager gibt es mindestens einen, in der Regel aber mehrere Stapel aus Behältern, die mit einem gewissen Abstand über einem Boden oder einer anderen Aufstandsfläche angeordnet sind. Dies wird dadurch erreicht, dass der unterste Behälter eines Stapels durch eine lösbare Haltevorrichtung gehalten wird. Zum Einbringen eines Behälters wird der Beschickungswagen unter den Stapel gefahren. Er hebt dann den Behälter an, bis er den bis dahin untersten Behälter des Stapels kontaktiert. Bei einem weiteren Anheben des Behälters wird der gesamte Stapel angehoben. Das Anheben erfolgt so lange, bis der neu einzubringende Behälter an der oben genannten Haltevorrichtung vorbeigeführt worden ist und bei einer folgenden Bewegung nach unten von der Haltevorrichtung gehalten wird. Wenn der Behälter aus dem Stapel entnommen werden soll, muss wiederum der gesamte Stapel etwas angehoben werden, so dass die Haltevorrichtung gelöst werden kann. Danach wird der Stapel abgesenkt und die Haltevorrichtung greift dann am bis dahin zweituntersten Behälter an, um diesen zu halten. Sobald der bis dahin zweitunterste Behälter von der Haltevorrichtung an einer weiteren Bewegung nach unten gehindert wird, kann der zu entnehmende Behälter weiter abgesenkt werden. Der Beschickungswagen kann den Behälter dann aus dem Behälterstapellager heraustransportieren.

In DE 10 2009 010 551 A1 ist eine Vorrichtung zum Stapeln und/oder Entstapeln von Gegenständen beschrieben.

Der Erfindung liegt die Aufgabe zugrunde, das Einlagern und die Entnahme von Behältern aus einem Behälterstapellager wirtschaftlich zu gestalten.

Diese Aufgabe wird mit einem Behälterstapellager-Beschickungswagen nach Anspruch 1 gelöst. Die Hubeinrichtung weist einen ersten Hubantrieb auf, wobei ein zweiter Hubantrieb vorgesehen ist, der auf eine Entriegelungseinrichtung für Halteelemente eines Behälterstapellagers wirkt. Die Entriegelungseinrichtung weist eine gegenüber der Behälteraufnahme in Hubrichtung bewegbare Entriegelungselementanordnung auf.

Wie oben beschrieben, werden die Behälter eines Stapels dadurch im Abstand vom Boden gehalten, dass eine Anordnung von Halteelementen in Eingriff mit dem untersten Behälter eines Stapels kommt und diesen daran hindert, sich weiter nach unten zu bewegen. Wenn man einen Behälter von unten an den Stapel ansetzt und den Behälter nach oben bewegt, dann können die Halteelemente durch den neu zugeführten Behälter geöffnet werden. Wenn der Stapel dann nach unten bewegt wird, dann kommen die Halteelemente in Eingriff mit dem neu eingelagerten Behälter. Bei einer Entnahme eines Behälters aus einem Stapel müssen die Halteelemente jedoch gelöst und offen gehalten werden, bis dieser Behälter an den Halteelementen vorbei geführt worden ist. Hierzu ist die Entriegelungseinrichtung vorgesehen, die durch den zweiten Hubantrieb betätigbar ist. Wenn die Behälteraufnahme soweit bewegt worden ist, dass der unterste Behälter eines Stapels etwas angehoben wird, dann kann man durch die weitere Hubbewegung der Entriegelungselementanordnung das Offenhalten oder Entriegeln der Halteelemente bewirken. Die hierzu notwendige Zeit kann damit außerordentlich kurzgehalten werden. Es ergibt sich eine quasi automatische Abstimmung von Bewegungsabläufen in dem Beschickungswagen.

Die Entriegelungseinrichtung ist an der Behälteraufnahme angeordnet. Damit kann man sicherstellen, dass die Entriegelungseinrichtung gemeinsam mit der Behälteraufnahme zum Behälterstapel hinbewegt wird, wenn die Behälteraufnahme angehoben wird. Es ist dann lediglich eine kleine zusätzliche Bewegung notwendig, um die Halteelemente zu entriegeln oder zu lösen oder um die Haltelemente in einer geöffneten Position zu halten. In diesem Zustand ist aber gleichzeitig sichergestellt, dass die Behälteraufnahme den untersten Behälter des Stapels in ausreichender Weise abstützt.

Die Entriegelungselementanordnung weist mehrere im Bereich von Ecken der Behälteraufnahme angeordnete Entriegelungselemente auf, wobei zumindest einige der Entriegelungselemente eine Zentrierflächenanordnung aufweisen, die zum Aufnahmebereich gerichtet ist. Die Entriegelungselemente bilden damit eine Zentriereinrichtung, mit der der entnommene Behälter mit einer hohen Genauigkeit in eine gewünschte Position auf der Behälteraufnahme geführt werden kann, wenn die Behälteraufnahme von unten an den entsprechenden Behälter herangefahren wird. Dies ist nicht nur bei der Entnahme eines Behälters aus einem Stapel ein großer Vorteil. Auch beim Einlagern eines Behälters in den Stapel kann man durch die Entriegelungselemente die gewünschte Position sicherstellen, so dass man gleichzeitig sicherstellen kann, dass der neu einzulagernde Behälter auf den Behälterstapel ausgerichtet ist.

Hierbei ist bevorzugt, dass die Behälteraufnahme gegenüber dem Fahrgestell schwimmend gelagert ist. Sie kann dann beispielsweise um einige Millimeter in alle Richtungen bewegt werden, um eine Übereinstimmung zwischen der Position der Behälteraufnahme und der Position des Behälters herzustellen.

Hierbei ist bevorzugt, dass die Entriegelungselementanordnung in einer Transportposition der Behälteraufnahme über die Behälteraufstandsfläche im Aufnahmebereich vorsteht. Die Entriegelungselementanordnung bildet dann nicht nur eine Zentriereinrichtung, mit der der Behälter auf der Behälteraufnahme in eine gewünschte Position bewegt wird. Er bildet auch eine Transportsicherung, weil die Entriegelungselemente den Behälter während einer Fahrt des Beschickungswagens jedenfalls über einen kleinen Höhenbereich umgreifen können und damit verhindern können, dass der Behälter seitlich von der Behälteraufnahme herabrutscht. Damit lassen sich beim Beschickungswagen hohe positive und negative Beschleunigungen realisieren, so dass die Entnahme von Behältern aus dem Stapellager und das Einlagern von Behältern in das Stapellager in kurzer Zeit vorgenommen werden kann.

Vorzugsweise ist eine Sensoranordnung vorgesehen, mit der ein Zustand in einem Wirkbereich der Entriegelungseinrichtung überwachbar ist. Die Sensoranordnung kann beispielsweise feststellen, ob die Entriegelungseinrichtung die Halteelemente ordnungsgemäß entriegelt hat oder ob bei einem Absenken eines Stapels zum Entnehmen eines Behälters die Halteelemente mit dem dann unteren Behälter in Eingriff gekommen sind.

Sollte dies beispielsweise nicht der Fall sein, dann kann man das weitere Absenken der Behälteraufnahme stoppen und eine Fehlermeldung auslösen. Gegebenenfalls kann man auch vorsehen, dass man durch wiederholtes Anheben und Absenken versucht, einen ordnungsgemäßen Eingriff der Halteelemente mit dem Behälter zu erreichen und eine Fehlermeldung erst erzeugt, wenn man nach mehrfacher Wiederholung kein zufriedenstellendes Ergebnis erreicht. Eine Beschädigung eines Behälterstapels oder sogar des Behälterstapellagers kann damit vermieden werden.

Hierbei ist bevorzugt, dass die Sensoranordnung außerhalb der Entriegelungseinrichtung angeordnet ist. Die Sensoranordnung wird dann nicht durch die Entriegelungseinrichtung abgeschattet.

Bevorzugterweise weist der Beschickungswagen einen Positionssensor auf, mit dem eine Position des Beschickungswagens feststellbar ist. Wenn der Beschickungswagen in das Stapellager eingefahren wird, um einen Behälter einzulagern oder zu entnehmen, muss der Beschickungswagen relativ genau positioniert werden können. Hierzu ist der Positionssensor sehr hilfreich.

Hierbei ist bevorzugt, dass die Sensoranordnung zumindest einen Teil des Positionssensors bildet. Wenn die Sensoranordnung den Zustand im Bereich der Entriegelungseinrichtung feststellen kann, dann ist er in der richtigen Position.

Vorzugsweise weist die Hubeinrichtung eine Schubkette auf. Eine Schubkette ist eine Kette mit mehreren Kettengliedern, die gelenkig miteinander verbunden sind. Die Glieder weisen aber eine Form auf, die so ausgebildet ist, dass sich die Glieder in einer bestimmten Richtung aneinander anlegen können, so dass die Kette in dieser Richtung eine ausreichende Steifigkeit erhält. Der Antrieb der Schubkette kann mit einem herkömmlichen Rotationsmotor erfolgen, beispielsweise einem elektrischen Motor, wobei man die Hubgeschwindigkeit durch die Drehzahl des Motors einstellen kann.

Vorzugsweise weist die Schubkette ein erstes Trum, das zwischen dem Fahrgestell und der Behälteraufnahme angeordnet ist, und ein zweites Trum, das quer zum ersten Trum gerichtet ist, auf. Damit ist im abgesenkten Zustand der Behälteraufnahme nur ein sehr geringer Bauraum für die Hubeinrichtung erforderlich. Man kann daher den Beschickungswagen mit einer entsprechend geringen Bauhöhe ausbilden, was wiederum dazu führt, dass der Freiraum, der unter dem oder den Behälterstapeln vorhanden sein muss, klein gehalten werden kann. Dementsprechend steht mehr Raum zum Einlagern der Behälter zur Verfügung.

In einer bevorzugten Ausgestaltung ist die Behälteraufnahme über einen Hubweg verfahrbar und ist über den Hubweg am Fahrgestell geführt. Die seitliche Stabilität, also eine Stabilität quer zur Hubrichtung, wird dann über die Führung am Fahrgestell gewährleistet. Die Schubkette selbst muss keine seitlichen Kräfte mehr aufnehmen. Hier reicht es aus, wenn sie die zum Anheben der Behälteraufnahme mit Behälter oder mit Behälterstapel erforderlichen Kräfte aufbringen kann.

Vorzugsweise weist die Behälteraufnahme in der Behälteraufstandsfläche mindestens zwei Ausklinkungen auf, die zu mindestens einer Seite der Behälteraufstandsfläche hin offen sind. Dies kann man ausnutzen, um mit dem Beschickungswagen den Behälter nicht nur aus dem Behälterstapellager, also unterhalb der Behälterstapel, heraus zu transportieren. Man kann den Beschickungswagen gleichzeitig verwenden, um den Behälter dann in einer Position abzulegen, ohne dass außerhalb des Beschickungswagens eine weitere Hubeinrichtung notwendig ist. Die Ablageeinrichtung für den Behälter weist dann beispielsweise zwei Zinken auf, die in die Ausklinkung eingreifen. An der Oberseite der Zinken können dann Rollen oder Transportbänder angeordnet sein, um den Behälter seitlich vom Beschickungswagen abzutransportieren.

Die Erfindung wird im Folgenden anhand eines bevorzugten Ausführungsbeispiels in Verbindung mit einer Zeichnung beschrieben. Hierin zeigen:
- Fig. 1: einen Beschickungswagen für ein Behälterstapellager in perspektivischer Darstellung,
- Fig. 2: eine Darstellung zur Erläuterung einer Schubkette,
- Fig. 3: den Beschickungswagen nach Fig. 1 mit einem Behälter in ausgefahrener Position,
- Fig. 4: den Beschickungswagen nach Fig. 1 mit dem Behälter in abgesenkter Position,
- Fig. 5: eine Behälteraufnahme des Beschickungswagens nach Fig. 5 mit einer Entriegelungseinrichtung,
- Fig. 6: die Entriegelungseinrichtung,
- Fig. 7: eine schematische Darstellung zur Erläuterung der Funktion der Entriegelungseinrichtung,
- Fig. 8: die Darstellung nach Fig. 7 in einer anderen Position des Behälters, und
- Fig. 9: eine schematische Darstellung zur Erläuterung von Zentrierflächen.

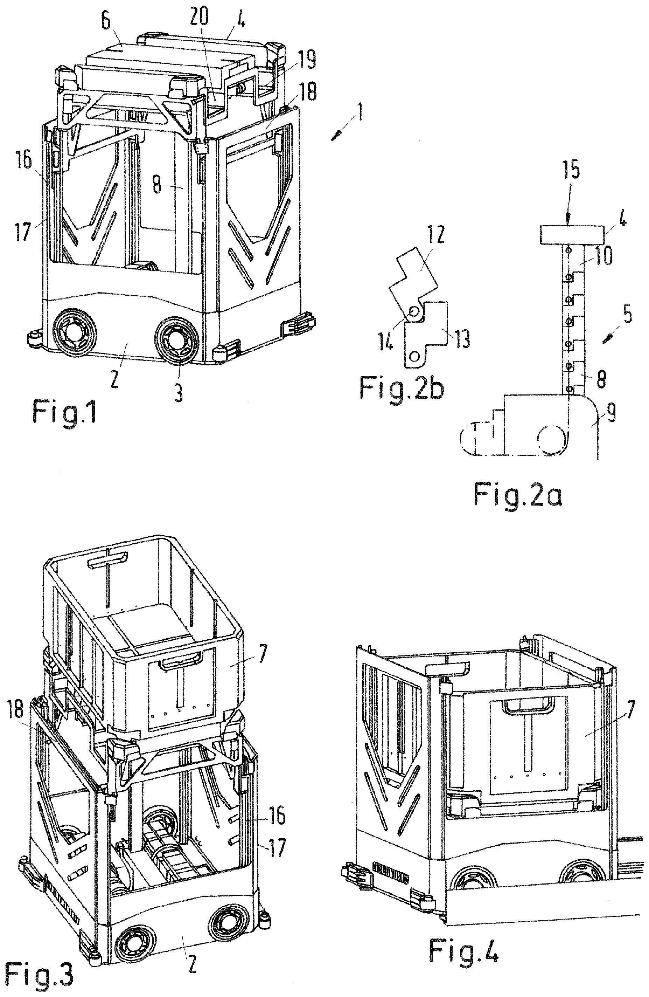

Fig. 1 zeigt einen Beschickungswagen 1 für ein nicht näher dargestelltes Behälterstapellager.

Der Beschickungswagen 1 weist ein Fahrgestell 2 mit mehreren Rädern 3 auf, mit denen der Beschickungswagen auf einem Fußboden oder einer anderen Unterlage verfahrbar ist.

Ferner weist der Beschickungswagen 1 eine höhenverstellbare Behälteraufnahme 4 auf, deren Höhe gegenüber dem Fahrgestell 2 durch eine Hubeinrichtung 5, die in Fig. 2 näher dargestellt ist, veränderbar ist. Mit der Hubeinrichtung 5 kann die Behälteraufnahme 4 in eine Hubrichtung bewegt werden. Die Hubrichtung entspricht dabei in der Regel der Schwerkraftrichtung.

Die Behälteraufnahme 4 weist eine Behälteraufstandsfläche 6 auf, auf der ein in den Fig. 3 und 4 dargestellter Behälter 7 aufgesetzt werden kann. Dies wird weiter unten noch erläutert werden.

Die Hubeinrichtung 5 weist eine Schubkette 8 auf. Die Schubkette 8 wird durch einen Elektromotor oder einen anderen Aktor, der hydraulisch oder pneumatisch ausgebildet sein kann, angetrieben, der damit einen Hubantrieb 9 bildet. Sie weist ein erstes Trum 10 auf, das zwischen dem Fahrgestell 2 und der Behälteraufnahme 4 angeordnet ist und sich in Hubrichtung erstreckt, und ein zweites Trum 11, das quer zum ersten Trum gerichtet ist. Das zweite Trum 11 verläuft vorzugsweise parallel zum Boden (oder einer anderen Aufstandsfläche), auf dem die Räder 3 rollen können. Die Richtung des zweiten Trums 11 muss allerdings nicht mit der Rollrichtung der Räder übereinstimmen. Wie man in Fig. 1 erkennen kann, ist die Richtung des zweiten Trums 11 senkrecht zur Rollrichtung der Räder 3 ausgerichtet. Das zweite Trum kann auch parallel zur Rollrichtung der Räder ausgerichtet sein.

Die Schubkette 8 weist mehrere Kettenglieder 12, 13 auf, die an Gelenkpunkten 14 gelenkig miteinander verbunden sind. Dementsprechend kann (bezogen auf die Darstellung der Fig. 2b) das Kettenglied 12 gegenüber dem Kettenglied 13 nach links verschwenkt werden. Wenn das Kettenglied 12 gegenüber dem Kettenglied 13 hingegen nach rechts verschwenkt wird, dann liegen die beiden Kettenglieder 12, 13 in Hubrichtung aneinander an und können eine Kraft, die durch einen Pfeil 15 symbolisiert worden ist, auf die Behälteraufnahme 4 übertragen. Wenn die Behälteraufnahme 4 abgesenkt werden soll, dann wird das erste Trum 10 abgesenkt und die Kettenglieder 12, 13 können um den Gelenkpunkt 14 gegeneinander verschwenkt werden, so dass sich das zweite Trum 11 vorzugsweise parallel zum Boden erstrecken kann.

Die Schubkette 8 muss allerdings nur Kräfte in Hubrichtung aufnehmen können. Die Behälteraufnahme 4 ist in einer Führung 16 am Fahrgestell 2 geführt und damit in alle Richtungen quer zur Hubrichtung abgestützt. Hierzu sind am Fahrgestell 2 mehrere Säulen 17 vorgesehen, die, falls erforderlich, durch Verbinder 18 miteinander verbunden sein können. Im Bereich der Säulen 17 sind die entsprechenden Führungen 16 angeordnet. Bei einer ausreichenden Steifigkeit reicht auch eine Säule 17 aus, die dann auch nur eine Führung 16 bildet.

Wie man durch einen Vergleich der Fig. 3 und 4 unschwer erkennen kann, ist die Behälteraufnahme 4 über den gesamten Hubweg am Fahrgestell 2 geführt, nämlich durch die Führungen 16 im Bereich der Säulen oder Ständer 17.

Die Behälteraufnahme 4 weist in der Behälteraufstandsfläche 6 zwei oder mehr Ausklinkungen 19, 20 auf, die zu mindestens einer Seite der Behälteraufstandsfläche 6 hin offen sind. Vorzugsweise sind die Ausklinkungen 19, 20 aber zu beiden Seiten der Behälteraufstandsfläche 6 hin offen. Die Öffnung der Ausklinkungen ist dabei vorzugsweise in Rollrichtung der Räder 3 gerichtet. Damit ist es möglich, einen Behälter 7, der auf der Behälteraufstandsfläche 6 aufsteht, in eine Abgabestation zu übergeben, wobei es lediglich erforderlich ist, dass die Abgabestation zwei zinkenartige Vorsprünge aufweist, die in die Ausklinkungen 19, 20 eintreten können, wenn der Beschickungswagen 1 entsprechend dorthin verfahren wird. Danach kann die Behälteraufnahme 4 abgesenkt werden, so dass der Behälter 7 an die Abgabestation übergeben werden kann. Auch die Übernahme eines Behälters 7 aus einer entsprechenden Aufnahmeeinrichtung kann auf diese Weise realisiert werden. Hierzu wird der Beschickungswagen 1 ohne Behälter 7 in die Aufnahmeeinrichtung gefahren. Wenn dann die Hubeinrichtung 5 die Behälteraufnahme 4 anhebt, kommt der Behälter 7 von der Aufnahmeeinrichtung frei und kann dann gemeinsam mit dem Beschickungswagen 1 abtransportiert werden.

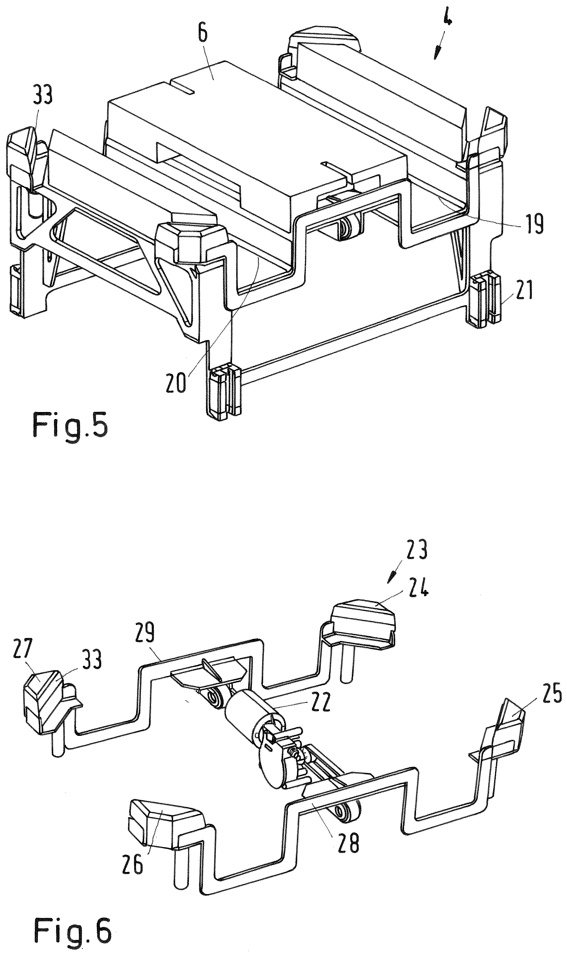

Fig. 5 zeigt die Behälteraufnahme 4 in einer vergrößerten Darstellung. Gleiche Elemente sind in allen Figuren mit den gleichen Bezugszeichen versehen.

An der Behälteraufnahme 4 sind Führungselemente 21 angeordnet, die mit den oben beschriebenen Führungen 16 in Eingriff stehen, um die Behälteraufnahme 4 über den gesamten Hubweg führen zu können. Wenn nur eine Führung 16 vorgesehen ist, ist vorzugsweise auch nur ein Führungselement vorhanden.

Neben dem ersten Hubantrieb 9, der durch den Motor der Hubeinrichtung 5 gebildet wird, ist ein zweiter Hubantrieb 22 vorgesehen, der in Fig. 6 näher dargestellt ist. Mit dem zweiten Hubantrieb 22 kann eine Entriegelungseinrichtung 23 für Halteelemente eines Behälterstapellagers in Hubrichtung bewegt werden.

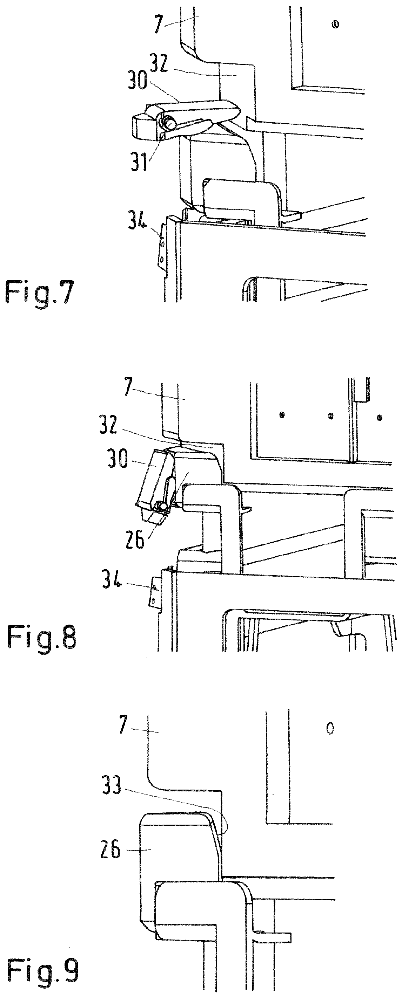

Die Entriegelungseinrichtung 23 weist vier Entriegelungselemente 24-27 auf, die an vier Ecken der Behälteraufstandsfläche 6 angeordnet sind. Die Entriegelungselemente 24-27 sind jeweils paarweise durch Rahmen 28, 29 miteinander verbunden. Der zweite Hubantrieb 22 wirkt auf die Rahmen 28, 29. Der zweite Hubantrieb 22 ist an der Unterseite der Behälteraufnahme 4 angeordnet. Dementsprechend wird die Entriegelungseinrichtung 23 gemeinsam mit der Behälteraufnahme 4 bewegt, wenn die Behälteraufnahme 4 bewegt wird. Es ist aber zusätzlich möglich, die Entriegelungseinrichtung 23 gegenüber der Behälteraufstandsfläche 6 weiter in Hubrichtung zu bewegen. Dies wird anhand der Fig. 7 und 8 erläutert.

Fig. 7 zeigt einen Behälter 7 beim Einlagern in ein nicht näher dargestelltes Behälterstapellager. Von dem Behälterstapellager ist lediglich ein Halteelement 30 dargestellt. Für jeden Stapel von Behältern 7 sind vorzugsweise vier derartige Halteelemente 30 vorgesehen, die an den vier Ecken des Stapels angeordnet sind. Im Prinzip reichen auch zwei Haltelemente 30 aus, die gegenüberliegend, vorzugsweise diagonal gegenüberliegend an den Ecken des Behälters 7 angeordnet sind.

Das Halteelement 30 ist als Klinke ausgebildet, die um eine Achse 31 verschwenkbar angeordnet ist. Wenn ein Behälter 7 von unten nach oben bewegt wird, dann wird das Halteelement 30 um die Achse 31 nach oben geschwenkt und lässt den Behälter, der eine Aussparung 32 an seinem unteren Ende aufweist, passieren. Sobald die Aussparung 32 in den Bereich des Halteelements 30 kommt, klappt das Halteelement 30 in die in Fig. 7 dargestellte Position. Wenn der Behälter 7 dann abgesenkt wird, liegt er auf dem Halteelement 30 auf. Die Behälteraufnahme 4 kann dann weiter abgesenkt werden und der Beschickungswagen 1 ist für weitere Aufgaben wieder frei.

Wenn hingegen der unterste Behälter 7 aus dem Stapel entnommen werden soll, dann tritt die Entriegelungseinrichtung 23 in Funktion.

Zunächst wird die Behälteraufnahme 4 soweit angehoben, dass der unterste Behälter 7 eines Stapels auf der Behälteraufstandsfläche 6 aufsteht. Die Behälteraufnahme 4 wird dann über eine kleine Strecke weiter angehoben. Diese kleine Strecke ist so bemessen, dass das Halteelement 30 in die in Fig. 8 dargestellte Öffnungsstellung verschwenkt werden kann.

Dieses Verschwenken wird bei jedem Halteelement 30 durch ein Entriegelungselement 26 (die anderen Entriegelungselemente 24, 25, 27 sind hier nicht dargestellt) bewirkt, indem die Entriegelungseinrichtung 23 gegenüber der Behälteraufnahme 4 in Hubrichtung weiterbewegt wird, bis das Entriegelungselement 26 in die Aussparung 32 eintritt. Danach kann die Behälteraufnahme 4 mit der ausgefahrenen Entriegelungseinrichtung 23 abgesenkt werden. Das Halteelement 30 kann nicht in die Aussparung 32 zurückklappen, weil die Aussparung 32 durch die Entriegelungselemente 24-27 blockiert ist.

Wie man insbesondere in den Fig. 5, 6 und 9 erkennen kann, haben die Entriegelungselemente 24-27 noch eine Zentrierfunktion. Hierzu weist jedes der Entriegelungselemente 24-27 eine Zentrierfläche 33 auf, die gegenüber der Hubrichtung etwas geneigt wird. Wenn der Behälter 7 nicht genau gegenüber einer gewünschten Position auf der Behälteraufstandsfläche 6 ausgerichtet ist, dann erfolgt diese Ausrichtung durch die Zentrierflächen 33, die zum Aufnahmebereich der Behälteraufnahme 4 gerichtet sind. Der Aufnahmebereich wird nach unten durch die Behälteraufstandsfläche 6 begrenzt.

Man kann nun dafür sorgen, dass die Entriegelungseinrichtung 23 in einer ausgefahrenen Position bleibt, d.h. über die Behälteraufstandsfläche 6 übersteht, wenn ein Behälter auf der Behälteraufnahme steht. Dies ist beispielsweise dann günstig, wenn der Beschickungswagen 1 den Behälter 7 transportieren soll. Die Entriegelungselemente 24-27 halten dann den Behälter 7 auf der Behälteraufstandsfläche 6 fest und verhindern, dass der Behälter 7 auf der Behälteraufstandsfläche 6 verrutscht. Damit wird nicht nur ein Herabfallen des Behälters 7 von der Behälteraufstandsfläche 6 verhindert. Man kann auch sicherstellen, dass der Behälter 7 immer in einer vorbestimmten Position auf der Behälteraufstandsfläche 6 verbleibt, was die weitere Handhabung des Behälters 7 erleichtert.

Wie man in den Fig. 7 und 8 erkennen kann, ist am Behälterwagen 1 eine Sensoranordnung 34 vorgesehen, mit der ein Zustand in einem Wirkbereich der Entriegelungseinrichtung 23 überwachbar ist. Insbesondere ist die Sensoranordnung dazu vorgesehen, festzustellen, ob die Halteelemente 30 beim Absenken eines Stapels von Behältern 7 in eine Halteposition abgesenkt worden sind. In dieser Position sind sie dann mit dem vorletzten Behälter, also dem untersten nicht zu entnehmenden Behälter, in Eingriff gekommen. Sollte dies nicht der Fall sein, kann man die weitere Betätigung der Hubeinrichtung, also das weitere Absenken des Stapels unterbrechen und eine Fehlermeldung ausgeben.

Die Sensoranordnung 34 ist vorzugsweise außerhalb der Entriegelungseinrichtung 23 angeordnet, d.h. sie wird durch die Entriegelungseinrichtung nicht abgeschattet.

Man kann die Sensoranordnung 34 auch verwenden, um zu überprüfen, ob der Beschickungswagen die richtige Position innerhalb des Stapellagers erreicht hat. Wenn die Sensoranordnung 34 feststellen kann, dass sich alle Halteelemente 30 in der Verriegelungsposition befinden, dann ist der Beschickungswagen 1 in der richtigen Position angekommen.

Es ist aber auch möglich, einen getrennten Positionssensor (nicht näher dargestellt) zu verwenden, der beispielsweise einen Mittelpunkt oder einen anderen prägnanten Punkt am unteren Behälter eines Stapels oder einen Punkt oder Bereich im Behälterstapellager erkennt.

## Patentansprüche

1. Behälterstapellager-Beschickungswagen (1) mit einem Fahrgestell (2) und einer gegenüber dem Fahrgestell (2) höhenverstellbaren Behälteraufnahme (4), die einen Aufnahmebereich mit einer Behälteraufstandsfläche (6) aufweist, wobei zwischen dem Fahrgestell (2) und der Behälteraufnahme (4) eine in eine Hubrichtung wirkende Hubeinrichtung (5) des Beschickungswagens (1) angeordnet ist, die Hubeinrichtung (5) einen ersten Hubantrieb (9) aufweist, wobei eine Entriegelungseinrichtung (23) des Beschickungswagens (1) an der Behälteraufnahme (4) angeordnet ist, wobei der Beschickungswagen (1) einen zweiten Hubantrieb (22) aufweist, der auf die Entriegelungseinrichtung (23) für Halteelemente (30) eines Behälterstapellagers wirkt, wobei die Entriegelungseinrichtung (23) eine gegenüber der Behälteraufnahme (4) in Hubrichtung bewegbare Entriegelungselementanordnung aufweist, **dadurch gekennzeichnet, dass** die Entriegelungselementanordnung mehrere im Bereich von Ecken der Behälteraufnahme (4) angeordnete Entriegelungselemente (24-27) aufweist, wobei zumindest einige der Entriegelungselemente (24-27) eine Zentrierflächenanordnung (33) aufweisen, die zum Aufnahmebereich gerichtet ist.

2. Beschickungswagen nach Anspruch 1, **dadurch gekennzeichnet, dass** die Behälteraufnahme (4) gegenüber dem Fahrgestell (2) schwimmend gelagert ist.

3. Beschickungswagen nach Anspruch 1 oder 2, **dadurch gekennzeichnet, dass** die Entriegelungselementanordnung in einer Transportposition der Behälteraufnahme (4) über die Behälteraufstandsfläche (6) im Aufnahmebereich vorsteht.

4. Beschickungswagen nach einem der Ansprüche 1 bis 3, **dadurch gekennzeichnet, dass** eine Sensoranordnung (34) vorgesehen ist, mit der ein Zustand in einem Wirkbereich der Entriegelungseinrichtung (23) überwachbar ist.

5. Beschickungswagen nach Anspruch 4, **dadurch gekennzeichnet, dass** die Sensoranordnung (34) außerhalb der Entriegelungseinrichtung (23) angeordnet ist.

6. Beschickungswagen nach einem der Ansprüche 1 bis 5, **dadurch gekennzeichnet, dass** er einen Positionssensor aufweist, mit der eine Position des Beschickungswagens feststellbar ist.

7. Beschickungswagen nach Anspruch 6, **dadurch gekennzeichnet, dass** die Sensoranordnung zumindest einen Teil des Positionssensors bildet.

8. Beschickungswagen nach einem der Ansprüche 1 bis 7, **dadurch gekennzeichnet, dass** die Hubeinrichtung (5) eine Schubkette (8) aufweist.

9. Beschickungswagen nach Anspruch 8, **dadurch gekennzeichnet, dass** die Schubkette (8) ein erstes Trum (10), das zwischen dem Fahrgestell (2) und der Behälteraufnahme (4) angeordnet ist, und ein zweites Trum (11), das quer zum ersten Trum (10) gerichtet ist, aufweist.

10. Beschickungswagen nach einem der Ansprüche 1 bis 9, **dadurch gekennzeichnet, dass** die Behälteraufnahme (4) über einen Hubweg verfahrbar ist und über den Hubweg am Fahrgestell (2) geführt ist.

11. Beschickungswagen nach einem der Ansprüche 1 bis 10, **dadurch gekennzeichnet, dass** die Behälteraufnahme (4) in der Behälteraufstandsfläche (6) mindestens zwei Ausklinkungen (19, 20) aufweist, die zu mindestens einer Seite der Behälteraufstandsfläche (6) hin offen sind.

## Claims

1. Container stacking warehouse loading cart (1) comprising a chassis (2) and a container receptacle (4) that is height-adjustable relative to the chassis (2) and has a receiving area with a container support surface (6), wherein a lifting device (5) of the loading cart (1) acting in a lifting direction is arranged between the chassis (2) and the container receptacle (4), the lifting device (5) comprises a first lifting drive (9); a release mechanism (23) of the loading cart (1) is arranged on the container receptacle (4), wherein the loading cart (1) comprises a second lifting drive (22) that acts on the release mechanism (23) for retaining elements (30) of a container stacking rack, wherein the release mechanism (23) comprises a release element assembly movable relative to the container receptacle (4) in the lifting direction, **characterized in that** the release element assembly comprises a plurality of release elements (24-27) arranged in the vicinity of corners of the container receptacle (4), wherein at least some of the release elements (24-27) comprise a centering surface assembly (33) directed toward the receiving area.

2. Loading cart according to claim 1, **characterized in that** the container receptacle (4) is mounted in a floating manner relative to the chassis (2).

3. Loading cart according to claim 1 or 2, **characterized in that**, in a transport position of the container receptacle (4), the release element assembly protrudes beyond the container contact surface (6) into the receiving area.

4. Loading cart according to any one of claims 1 through 3, **characterized in that** a sensor assembly (34) is provided, with which a condition within an operational range of the release device (23) can be monitored.

5. Loading cart according to claim 4, **characterized in that** the sensor assembly (34) is arranged outside the release device (23).

6. Loading cart according to any one of claims 1 through 5, **characterized in that** it comprises a position sensor with which a position of the loading cart can be determined.

7. Loading cart according to claim 6, **characterized in that** the sensor assembly forms at least a portion of the position sensor.

8. Loading cart according to any one of claims 1 through 7, **characterized in that** the lifting device (5) comprises a push chain (8).

9. Loading cart according to claim 8, **characterized in that** the push chain (8) comprises a first strand (10), which is arranged between the chassis (2) and the container receptacle (4), and a second strand (11), which is oriented transversely to the first strand (10).

10. Loading cart according to any one of claims 1 through 9, **characterized in that** the container receptacle (4) is movable over a lifting stroke and is guided along the lifting stroke on the chassis (2).

11. Loading cart according to any one of claims 1 through 10, **characterized in that** the container receptacle (4) has at least two notches (19, 20) in the container contact surface (6) that are open toward at least one side of the container contact surface (6).

## Revendications

1. Chariot de chargement en entrepôt de piles de récipients (1) avec un châssis mobile (2) et une réception de récipient (4) réglable en hauteur par rapport au châssis mobile (2), qui comporte une zone de réception avec une surface de pose de récipient (6), sachant qu'un système de levage (5) du chariot de chargement (1) agissant dans une direction de levage est disposé entre le châssis mobile (2) et la réception de récipient (4), le système de levage (5) comporte un premier système d'entraînement de levage (9), sachant qu'un dispositif de déverrouillage (23) du chariot de chargement (1) est disposé sur la réception de récipient (4), sachant que le chariot de chargement (1) comporte un deuxième système d'entraînement de levage (22), qui agit sur le dispositif de déverrouillage (23) pour les éléments de maintien (30) d'un entrepôt de piles de récipients, sachant que le dispositif de déverrouillage (23) comporte un système à éléments de déverrouillage pouvant être mobile par rapport à la réception de récipient (4) en direction de levage, **caractérisé en ce que** le système à éléments de déverrouillage comporte plusieurs éléments de déverrouillage (24-27) disposés dans les zones des angles de la réception de récipient (4), sachant qu'au moins plusieurs des éléments de déverrouillage (24-27) comportent un système de surface de centrage (33), qui est dirigé vers la zone de réception.

2. Chariot de chargement selon la revendication 1, **caractérisé en ce que** la réception de récipient (4) est logé de façon flottante par rapport au châssis mobile (2).

3. Chariot de chargement selon la revendication 1 ou 2, **caractérisé en ce que** le système à éléments de déverrouillage fait saillie dans une position de transport de la réception de récipient (4) sur la surface de pose de récipient (6) dans la zone de réception.

4. Chariot de chargement selon l'une quelconque des revendications 1 à 3, **caractérisé en ce qu'**un système de détection (34) est prévu, avec lequel un état peut être surveillé dans une zone opérationnelle du dispositif de déverrouillage (23).

5. Chariot de chargement selon la revendication 4, **caractérisé en ce que** le système de détection (34) est disposé en dehors du dispositif de déverrouillage (23).

6. Chariot de chargement selon l'une quelconque des revendications 1 à 5, **caractérisé en ce qu'**il comporte un capteur de position avec lequel une position du chariot de chargement peut être constatée.

7. Chariot de chargement selon la revendication 6, **caractérisé en ce que** le système de détection forme au moins une partie du capteur de position.

8. Chariot de chargement selon l'une quelconque des revendications 1 à 7, **caractérisé en ce que** le système de levage (5) comporte une chaîne de poussée (8).

9. Chariot de chargement selon la revendication 8, **caractérisé en ce que** la chaîne de poussée (8) comporte un premier brin (10), qui est disposé entre le châssis mobile (2) et la réception de récipient (4) et un deuxième brin (11), qui est orienté transversalement au premier brin (10).

10. Chariot de chargement selon l'une quelconque des revendications 1 à 9, **caractérisé en ce que** la réception de récipient (4) peut être déplacée sur une course de levage et est guidée sur la course de levage sur le châssis mobile (2).

11. Chariot de chargement selon l'une quelconque des revendications 1 à 10, **caractérisé en ce que** la réception de récipient (4) comporte dans la surface de pose de récipient (6) au moins deux encoches (19, 20), qui sont ouvertes au moins vers un côté de la surface de pose de récipient (6).
